# EUROPEAN PATENT APPLICATION

(11) **EP 1 533 813 A2**
(43) Date of publication of application: **25.05.2005**
(21) Application number: 04257089.5
(22) Date of filing: 16.11.2004
(51) Int. Cl.: G11B 27/034, G11B 27/11

(54) **Information processing apparatus, information editing apparatus, information processing system, playback apparatus, playback system, method therefor, program therefor, and recording medium storing the program**

(30) Priority: 18.11.2003 JP 2003388490
(71) Applicant: Pioneer Corporation, Tokyo 153-8654 (JP)
(72) Inventor: Umehara, Y., Pioneer Corp. Tokorozawa Plant, Saitama 359-8522 (JP); Sasatani, Shinya, Pioneer Corp. Tokorozawa Plant, Saitama 359-8522 (JP)
(74) Representative: Haley, Stephen

(57) **Abstract**

Management information in a recording medium or a HD mounted on an information processing apparatus (400) is recorded in an external medium mounted on the information processing apparatus (400). The external medium is mounted on a portable information editing apparatus (300), and the management information is displayed by a terminal display apparatus. Based on this reproduction, modification management information is generated by editing a content for managing content information in the information processing apparatus (400), and then recorded in the external medium. The external medium is mounted on the information processing apparatus (400) again so that the modification management-information is received by a modification management information receiving section to be recorded in the recording medium or the HD, while the content information is edited automatically based on the edited content of the modification management information. The content information can be managed based on the content edited by the portable information editing apparatus (300), thus the editing is executed easily and effectively.

## Description

The present invention relates to an information processing apparatus, an information editing apparatus, an information processing system, a playback apparatus and a playback system for editing and processing information stored in a recording medium, a method therefor, a program therefor, and a recording medium storing the program.

Recently, as an apparatus for recording or reproducing information such as TV broadcasts, the one with a plurality of recording means becomes well known (for example, refer to http://www3.pioneer.co.jp/catalog/pdf/hec_dvd_synthesis0307.pdf: September 30, 2003). Such playback apparatus has a high-capacity hard disk (HD: Hard Disk) as a recording means and a drive for recording information readably in a recording medium such as DVD-R (Digital Versatile Disc-Recordable), DVD-RW (Digital Versatile Disc-ReWritable) and DVD-RAM (Digital Versatile Disc-Random Access Memory). Also, such playback apparatus is so configured, for example, to record information in the HD once and then appropriately record in a recording medium such as DVD, or to record information directly in the recording medium.

According to the configuration of a conventional playback apparatus, for example, video is edited while viewing pictures displayed on the screen. Therefore, the video can be edited only at a location where a monitor connected with the playback apparatus is installed. Accordingly, what is desired is a configuration that allows efficient and easy video editing.

An object of the present invention is to provide an information processing apparatus, an information editing apparatus, an information processing system, a playback apparatus and a playback system with which efficient information editing can be easily carried out, a method therefor, a program therefor, and a recording medium storing the program.

According to a first aspect of the present invention, an information processing apparatus includes: a recording section capable of recording information output from an output section and management information associated with the information for managing the information in a readable manner; a management information sending section for sending the management information; a modification management information receiving section for receiving modification management information in which a content in the management information for managing the information is modified with input operation in a terminal apparatus by which the sent management information is received; and an editing section for making the recording section store the modification management information so that the information is managed according to the modified content of the received modification management information.

According to a second aspect of the present invention, an information editing apparatus for editing and processing various information, which is recorded in a recording section capable of: recording plural pieces of the information and is output by an output section includes: a terminal information receiving section for receiving management information respectively associated with the information and recorded in the recording section for managing the information from a processing apparatus that processes the information so that the information can be output by the output section; a terminal display section for displaying the received management information; a modification management information generating section for generating modification management information in which a content in the management information for managing the information is modified with input operation; and a terminal information sending section for sending the modification management information to the processing apparatus so that the information is managed according to the modified content of the generated modification management information.

According to a third aspect of the present invention, an information processing system includes: the above information processing apparatus; and a terminal apparatus that receives the management information sent from the information processing apparatus, generates modification management information in which a content in the management information for managing the information is modified with input operation, and sends to the information processing apparatus.

According to a fourth aspect of the present invention, an information processing system includes: the above information processing apparatus; and the above information editing apparatus for receiving the management information from and sending the modification management information to the information processing apparatus as a processing apparatus.

According to a fifth aspect of the present invention, a playback apparatus includes: the above information processing apparatus; and an output section for outputting the information recorded in the information processing apparatus.

According to a sixth aspect of the present invention, a playback system includes: the above information processing system; and an output section for outputting the information recorded in an information processing apparatus of the information processing system.

According to a seventh aspect of the present invention, an information processing method for editing and processing various information, which is recorded in a recording section capable of recording plural pieces of the information and is output by an output section, includes: making a terminal apparatus receive management information recorded in the recording section and respectively associated with the information for managing the information; receiving modification management information, in which a content in the management information for managing the information is modified, generated with input operation in the terminal apparatus from the terminal apparatus; and recording the modification management information in the recording section so that the information is managed according to the modified content of the received modification management information.

According to a eighth aspect of the present invention, an information editing method for editing and processing of various information, which is recorded in a recording section capable of recording plural pieces of the information and is output by an output section, includes: receiving management information recorded in the recording section and respectively associated with the information for managing the information; modifying a content in the management-information for managing the information with input operation to generate modification management information; and recording the modification management information in the recording section so that the information is managed according to the modified content of the generated modification management information.

According to a ninth aspect of the present invention, an information processing program has a computing section to execute the above information processing method.

According to a tenth aspect of the present invention, an information processing program has a computing section to execute the above information editing method.

According to an eleventh aspect of the present invention, a recording medium stores any one of the above information processing programs.
Fig. 1 is a block diagram schematically showing the configuration of a recording/playback system according to one embodiment of the present invention;
Fig. 2 is a block diagram schematically showing the configuration of an information processing apparatus in the embodiment;
Fig. 3 is a block diagram schematically showing the configuration of an information editing apparatus in the embodiment;
Fig. 4 is a block diagram showing the detailed configuration of the information processing apparatus in the embodiment; and
Fig. 5A and Fig. 5B are conceptual diagrams each explaining the editing of content information in the embodiment: Fig. 5A is a conceptual diagram schematically showing management information; and Fig. 5B is a conceptual diagram schematically showing modification management information.

### [Configuration of Recording/playback system]

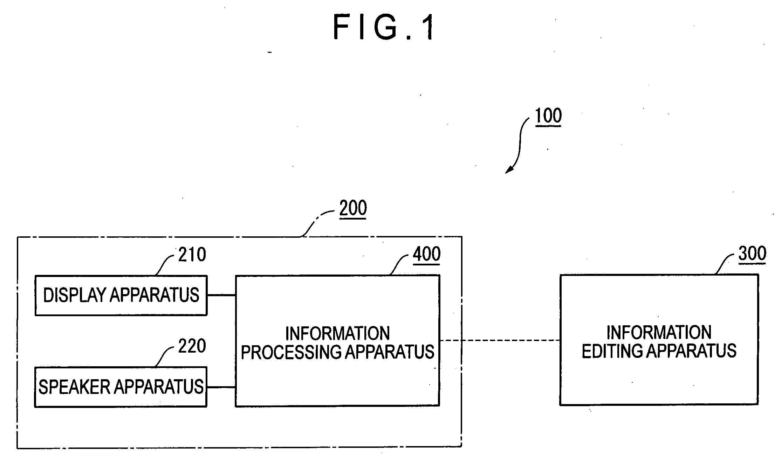

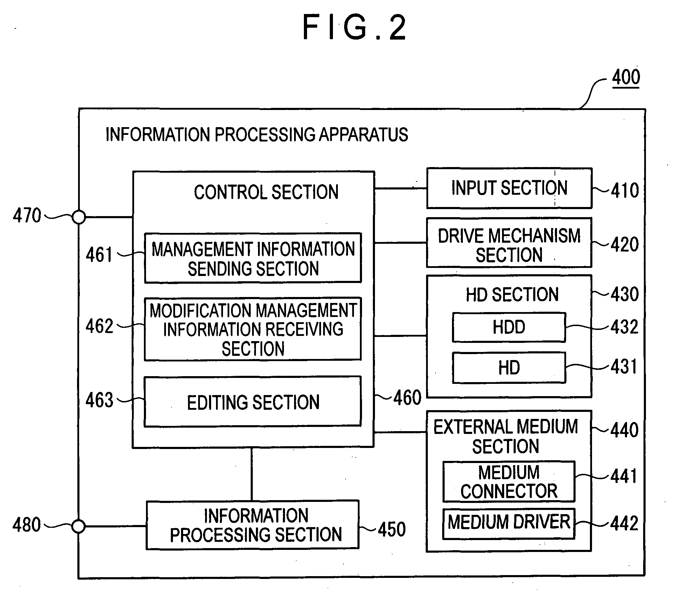

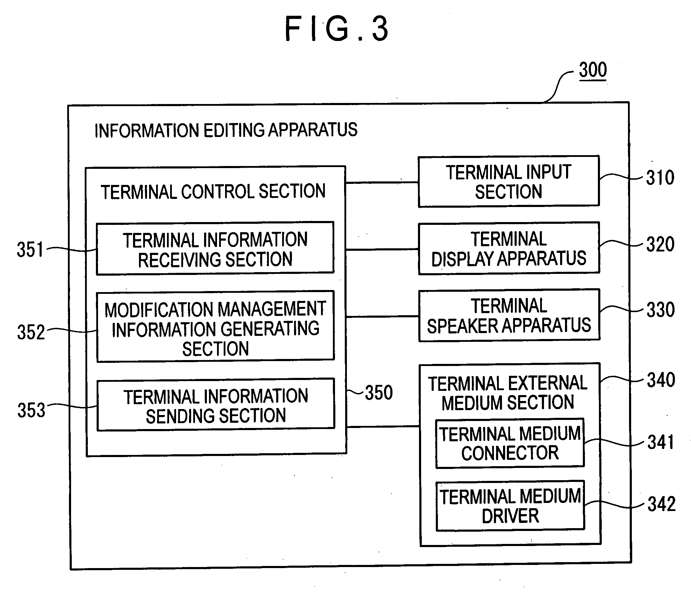

The configuration of one embodiment in a recording/playback system according to the present invention will be described with reference to attached drawings. In this embodiment, the configuration for editing and processing information recorded in a DVD-R (Digital Versatile Disc-Recordable) or the like as a recording medium will be described. However, the recording medium applicable to the present invention is not limited to the above, and any recording medium is applicable thereto. Fig. 1 is a block diagram schematically showing the configuration of a playback system. Fig. 2 is a block diagram schematically showing the configuration of an information processing apparatus. Fig. 3 is a block diagram schematically showing the configuration of an information editing apparatus.

### (Schematic Configuration of Recording/playback system)

Referring to Fig. 1, reference numeral 100 denotes a recording/playback system. The recording/playback system 100 records, edits and reproduces, for example, content information including information such as video data, image data and audio data contained in TV broadcasts or recorded in various types of recorders. The recording/playback system 100 is provided with a playback apparatus 200 and an information editing apparatus 300. The playback apparatus 200 is provided with a display apparatus 210, a speaker apparatus 220 and an information processing apparatus 400.

The display apparatus 210 of the playback apparatus 200 is connected to the information processing apparatus 400. The display apparatus 210 receives and appropriately processes content information such as video data and image data, which are the information output from the information processing apparatus 400, and then outputs them, i.e., displays them on a screen. The display apparatus 210 can also display TV image data received by a not-shown TV receiver on the screen. The display apparatus 210 may be, for example, a liquid crystal display panel, an organic EL (Electro Luminescence) panel, a PDP (Plasma Display Panel), a CRT (Cathode-Ray Tube), a FED (Field Emission Display) or an electrophoretic display panel. As for the configuration that the display apparatus 210 receives the content information from the information processing apparatus 400, any method is applicable, such as that for receiving via a cable or through a radio medium.

The speaker apparatus 220 of the playback apparatus 200 is provided with, for example, an audio output and an amplifier such as a speaker (not shown). The speaker apparatus 220 is connected to the information processing apparatus 400. The speaker apparatus 220 appropriately amplifies content information such as music data and audio data, which are the information output from the information processing apparatus 400, using the amplifier to output them as sounds, i.e., to produce sounds from the audio output. The speaker apparatus 220 can also output TV audio data received by, for example, a TV receiver as sounds. As for the configuration that the speaker apparatus 220 receives the content information from the information processing apparatus 400, any method is applicable, such as that for receiving via a cable or through a radio medium.

The information processing apparatus 400 of the playback apparatus 200 carries out processing for recording, editing and reproducing various types of information including, for example, content information such as video data, image data and audio data contained in TV broadcasts or recorded in various types of external recorders (not shown), and management information (VMGI: Video Manager Information), which is the information associated with the content information for managing, i.e., reproducing and searching for the content information. The management information is so-called playlist information such as title name information as unique information for identifying content information, recording date/time information regarding date/time of recording, size information regarding volume of the content information, and so-called thumbnail image data representing content of video data. As shown in Fig. 2, the information processing apparatus 400 is provided with an input section 410, a drive mechanism section 420, a HD (Hard Disk) section 430, an external medium section 440 as a medium recording section, an information processing section 450 as various types of programs used on an OS (Operating System) controlling the entire operation of the information processing apparatus 400, and a control section 460.

The input section 410 has various operation buttons and operation knobs (not shown) used for input operation. The input operation using the operation buttons and operation knobs includes the setting of, for example, setting items relevant to the operations of the information processing apparatus 400. When the setting items are input, the input section 410 outputs predetermined signals to the control section 460 to set the setting items. As for the configuration of the input section 410, without limiting to those with the operation buttons or operation knobs for input operation, any of the following configurations that can set and input various setting items may be employed. For example, input operation using a keyboard, a mouse, a touch panel provided on the display apparatus 210 or on a not-shown display apparatus of the information processing apparatus 400, and input operation using sounds are applicable.

Under the control of the control section 460, the drive mechanism section 420 records various types of information such as content information and management information in a detachably mounted recording medium, and reads out the recorded information. Herein, the recording medium may be, without limitation, a DVD-R (Digital Versatile Disc-Recordable), a DVD-RW (Digital Versatile Disc-ReWritable) or a DVD-RAM (Digital Versatile Disc-Random Access Memory). The drive mechanism section 420 is provided with, for example, a pickup (not shown), a rotary drive section and a feed motor (not shown). The pickup reads out data recorded on an information recording surface of the recording medium and records data thereon using the light or the like. In place of the light, magnetism or the like may be employed. The rotary drive section is provided with, for example, a turntable for supporting the recording medium and a spindle motor for driving the recording medium to rotate at a constant linear or constant angular velocity. The feed motor drives the pickup to move parallel to the information recording surface in the radius direction.

Under the control of the control section 460, the HD section 430 records various types of information readably. The HD section 430 is provided with a HD 431 and a HDD (Hard Disk Drive) 432. The HD 431 records various types of information readably. Under the control of the control section 460, the HDD 432 records information output from the control section 460 into the HD 431, and reads out information from the HD 431 to output it to the control section 460.

Under the control of the control section 460, the external medium section 440 records various types of information readably in a not-shown external medium (external recording medium), which is, for example, a silicon device such as memory card detachably mounted thereon. The external medium section 440 is provided with a medium connector 441 and a medium driver 442. The external medium is detachably connected to the medium connector 441. The medium driver 442 records information output from the control section 460 in the external medium connected to the medium connector 441, and reads out the information recorded in the external medium to output it to the control section 460. The configuration of the external medium section 440 is not limited as long as it can read out or record at least the management information as the information to be recorded.

Under the control of the control section 460, the information processing section 450 receives content information from, for example, an input terminal 470 provided to the information processing apparatus 400 and facing outwards, and processes the information. Further, the information processing section 450 processes the information so as to be output by the display apparatus 210 or the speaker apparatus 220 via, for example, an output terminal 480 provided to the information processing apparatus 400 and facing outwards. As for the input and output of the information in the information processing section 450, the following arrangement may be applicable. That is, in place of the input terminal 470 and output terminal 480, for example, the information may be input and processed or output to the display apparatus 210 or the speaker apparatus 220 via a radio medium using a communication tool.

Based on the setting items set through the input operation using the input section 410, the control section 460 receives various types of information appropriately from the input terminal 470 provided to the information processing apparatus 400 and facing outwards, the drive mechanism section 420, the HD section 430, the external medium section 440, or a not-show memory. The control section 460 records the information appropriately in a recording medium, the HD 431, an external medium or the like. Also, the control section 460 appropriately processes the information received by controlling the information processing section 450, and outputs, i.e., reproduces the information by the display apparatus 210 and the speaker apparatus 220. The control section 460 is provided with, for example, a management information sending section 461, a modification management information receiving section 462, an editing section 463 and the like as various types of programs used on the OS (Operating System) controlling the entire operation of the information processing apparatus 400.

Based on the setting items input through the input section 410, the management information sending section 461 controls the drive mechanism section 420 or the HD section 430 and receives, for example, management information recorded in a recording medium or management information recorded in the HD 431. The management information sending section 461 then controls the external medium section 440 and sends the received management information so that the information is recorded in the external medium mounted thereon. The management information sending section 461 can also receive Electrical Program Guide (EGP) as the management information directly from, for example, the input terminal 470, or via a radio medium using a communication tool so that the information is stored in the HD 431 or the not-shown memory etc.

Based on the setting items set through the input operation using the input section 410, the modification management information receiving section 462 controls the external medium section 440 to receive recorded modification management information from an external medium connected to the medium connector 441 using the medium driver 442. This modification management information (which will be described later in more detail) is the information in which content for managing the content information in the management information sent by the management information sending section 461 is modified. The modification management information receiving section 462 appropriately outputs the received modification management information to the editing section 463.

Based on the setting items set through the input operation using the input section 410, the editing section 463 receives the modification management information output from the modification management information receiving section 462, and appropriately outputs the information to the drive mechanism section 420 or the HD section 430 to be recorded therein. That is, the editing section 463 controls the drive mechanism section 420 or the HD section 430 that received management information from the management information sending section 461 so as to store the modification management information in a predetermined recording medium mounted on the drive mechanism section 420 or the HD 431 of the HD section 430 in which the management information before modifying the modification management information is stored.

The information editing apparatus 300 edits the content information recorded in the recording medium or the HD 431 by the information processing apparatus 400. That is, the information editing apparatus 300 appropriately modifies the management information of the content information so that the information processing apparatus 400 edits the content information according to the modified content. The information editing apparatus 300 may be, for example, a cellular phone, a PHS (Personal Handyphone System), a PDA (Personal Digital Assistant), a portable type personal computer such as a so-called notebook computer and a remote controller. The information editing apparatus 300 is provided with a terminal input section 310, a terminal display apparatus 320, a terminal speaker apparatus 330, a terminal external medium section 340 and a terminal control section 350.

Like the input section 410 of the information processing apparatus 400, the terminal input section 310 has various operation buttons and knobs (not shown) used for input operation. The input operation using the operation buttons and operation knobs includes setting items of, for example, setting for the operations of the information editing apparatus 300 as well as editing items for editing the management information recorded in the recording medium by the information editing apparatus 300. The editing items includes editing related to various managements, such as change of title name constituting the management information, deletion of the content information, protection for preventing the content information being deleted by mistake, creation of directory for storing the content information together, grouping processing for storing the content information together in the created directory, deletion of all the content information, change of storing location of the content information such as transfer from the recording medium to the HD 431, and initialization of the recording medium and the HD 431. With input operation, the terminal input section 310 appropriately outputs predetermined signals to-the-terminal control section 350 to set-the setting items, the editing items and the like. In the terminal input section 310, like the input section 410, various configuration such as input via a touch panel, voice or the like are applicable.

Under the control of the terminal control section 350, the terminal display apparatus 320 appropriately processes the management information output from the terminal control section 350 and outputs it, i.e., displays it on a screen. Displaying the management information on the screen may be, for example, displaying a list of title name information, recording date/time information or size information in text format and displaying a list of thumbnail image data. The terminal display apparatus 320 also displays the editing item for editing the management information through the input operation using the terminal input section 310, i.e., the editing condition of the management information. Like the display apparatus 210, various types of display apparatuses are applicable as the terminal display apparatus 320.

Like the speaker apparatus 220, the terminal speaker apparatus 330 is provided with an audio output and an amplifier. Under the control of the terminal control section 350, the terminal speaker apparatus 330 appropriately amplifies audio data representing the content of a part of the content information such as audio data and music data in the content information such as audio data and music data output from the terminal control section 350 to output them as sounds.

Like the external medium section 440 in the information processing apparatus 400, under the control of the terminal control section 350, the terminal external medium section 340 records various types of information such as the management information and the modification management information, which is the modified management information readably in a not-shown external medium (external recording medium) detachably mounted thereon. The terminal external medium section 340 records various types of information output from a terminal medium connector 341, to which the external medium is detachably connected, and the terminal control section 350 in the external medium connected to the terminal medium connector 341, and reads out the information recorded in the external medium to output it to the terminal control section 350.

Based on the setting items set through the input operation using the terminal input section 310, the terminal control section 350 performs processing so that the information processing apparatus 400 edits the content information to be reproduced by the display apparatus 210 and the speaker apparatus 220. The terminal control section 350 is provided with, for example, a terminal information receiving section 351, a modification management information generating section 352 and a terminal information sending section 353 as various types of programs used on the OS (Operating System) controlling the entire operation of the information editing apparatus 300.

Based on the setting items set through the input operation using the terminal input section 310, the modification management information receiving section 351 controls the terminal external medium section 340 to receive management information from an external medium connected to the terminal medium connector 341. The terminal information receiving section 351 is capable of acquiring various types of information without limiting to the management information. Other than the arrangement to acquire the management information recorded in the external medium, the terminal information receiving section 351 may have such configuration that, for example, the management information is acquired directly from the information processing apparatus 400 via a network or radio medium using a communication tool.

Based on signals of the above-described editing items corresponding to the edited content output from the terminal input section 310 through the predetermined input operation, the modification management information generating section 352 generates modification management information, which is the modified management information. The modification management information is generated by the following input operation. For example, the terminal control section 350 controls the terminal display apparatus 320 to display a screen for editing the management information, and the user modifies the management information using the terminal input section 310 with reference to the screen. The modification management information generating section 352 outputs the generated modification management information to the terminal information sending section 353.

The terminal information sending section 353 receives the modification management information output from the modification management information generating section 352, and controls the terminal external medium section 340 to record the information in the external medium connected to the terminal medium connector 341. Other than the arrangement in which the modification management information is recorded in the external medium, for example, it will be appropriate to have such arrangement that the modification management information is directly output and sent to the information processing apparatus 400 via radio medium using a communication tool.

### (Configuration of Information Processing Apparatus)

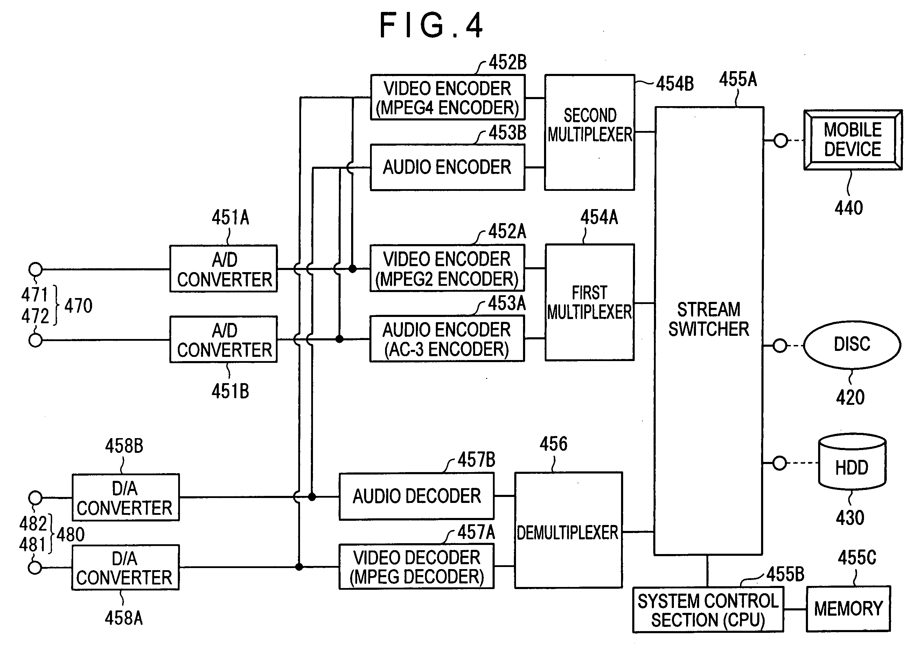

Next, referring to Fig. 4, specific configuration of the information processing apparatus 400 will be described in detail. Fig. 4 is a block diagram showing the detailed configuration of the information processing apparatus.

As described above, the information processing apparatus 400 is provided with the input terminal 470 for receiving the content information and the like from the outside, and the output terminal 480. As shown in Fig. 4, the input terminal 470 is provided with a video input terminal 471 to which content information such as video data and image data are input, and an audio input terminal 472 to which content information such as audio data and music data are input. A TV receiver, a video recorder (both not shown) or the like can be connected to the video input terminal 471 and the audio input terminal 472 so that content information such as TV image data and TV audio data are input thereto. Likewise, the output terminal 480 is provided with a video output terminal 481 for outputting content information such as video data and image data, and an audio output terminal 482 for outputting content information such as audio data and music data. The display apparatus 210 is connected to the video output terminal 481 so that the display apparatus 210 appropriately processes the content information to be output and displays it on the screen. The speaker apparatus 220 is connected to the audio output terminal 482 so that the speaker apparatus 220 appropriately processes the content information to be output and outputs it as sounds.

The information processing section 450 is connected to the input terminal 470 and the output terminal 480. As described above, the information processing section 450 appropriately encodes and multiplexes the content information input from the input terminal 470, and outputs the information to the drive mechanism section 420, the HD section 430 or the external medium section 440 to record it therein. Also, the information processing section 450 appropriately decodes the information received from the drive mechanism section 420, the HD section 430 or the external medium section 440 to output it via the output terminal.

To be more specific, a video A/D (Analog/Digital) converter 451A is connected to the video input terminal 471 whereas an audio A/D converter 451B is connected to the audio input terminal 472. The video A/D converter 451A converts the content information input from the video input terminal 471 from analog signals to digital signals to output them. The audio A/D converter 451B converts the content information input from the audio input terminal 472 from analog signals to digital signals to output them.

A first video encoder 452A and a second video encoder 452B are connected to the video A/D converter 451A. The first video encoder 452A encodes the content information such as video data and image data converted into digital signals based on, for example, MPEG-1 (Moving Picture Expert Group-1) or MPEG-2, which is a standard for compression and decompression of digital moving picture and sound established by International Telecommunication Union (ITU-TS) and International Organization for Standardization (ISO). The second video encoder 452B encodes the content information based on MPEG-4 in place of the MPEG-1/2 in the first video encoder 452A. As for the configuration for encoding in the information processing section 450, without limiting to these MPEGs, any format such as DivX (supported by DivXNetworks), which is one of the CODECs (Compression/Decompression) as a program for compressing and decompressing video and audio data, is applicable.

On the other hand, a first audio encoder 453A and a second audio encoder 453B are connected to the audio A/D converter 451B. The first audio encoder 453A encodes content information such as audio data and music data converted into digital signals based on, for example, AC-3 (Audio Code number 3), which is a digital surround system. The second audio encoder 453B encodes content information based on another standard.

A first multiplexer 454A is connected to the first video encoder 452A and the first audio encoder 453A whereas a second multiplexer 454B is connected to the second video encoder 452B and the second audio encoder 453B. The first multiplexer 454A multiplexes the encoded content information such as video data and image data output from the first video encoder 452A and the encoded content information such as audio data and music data output from the first audio encoder 453A, into a set of signals as a single channel to output it. Likewise, the second multiplexer 454B multiplexes the encoded video data and image data output from the second video encoder 452B and the encoded audio data and music data output from the second audio encoder 453B, into a set of signals as a single channel to output it.

A stream switcher 455A is connected to the first multiplexer 454A and the second multiplexer 454B. Further, a system control section 455B including a CPU (Central Processing Apparatus) and the like is connected to the stream switcher 455A. That is, the stream switcher 455A and the system control section 455B constitute the management information sending section 461, the modification management information receiving section 462 and the editing section 463. Based on the control signals from the system control section 455B, the stream switcher 455A outputs the multiplexed signals output from the first multiplexer 454A and the second multiplexer 454B to the drive mechanism section 420, the HD section 430 or the external medium section 440 to record the content information in the recording medium, the HD 431 or the external medium. The control signals from the system control section 455B are related to, for example, the setting items input through the input section 410, and based on the signals stored in a memory 455C connected to the system control section 455B. Also, based on the control signals from the system control section 455B, the stream switcher 455A receives various types of information from the drive mechanism section 420, the HD section 430 or the external medium section 440.

A demultiplexer 456 is connected to the stream switcher 455A. The demultiplexer 456 receives the content information output from the stream switcher 455A, and divides the multiplexed content information into content information such as video data and image data and the content information such as audio data and music data to output them.

A video decoder 457A and an audio decoder 457B are connected to the demultiplexer 456. The video decoder 457A decodes the content information such as video data and image data output from the demultiplexer 456 based on, for example, MPEG system to output it. The audio decoder 457B decodes the content information such as audio data and music data output from the demultiplexer 456 to output it.

A video D/A converter 458A is connected to the video decoder 457A whereas an audio D/A converter 458B is connected to the audio decoder 457B. The video D/A converter 458A converts the content information such as decoded video data and image data output from the video decoder 457A from digital signals into analog signals. The content information converted into analog signals is output from the video output terminal 481 connected with the video D/A converter 458A. Likewise, the audio D/A converter 458B converts the decoded content information such as audio data and music data output from the audio decoder 457B from digital signals into analog signals. The content information converted into analog signals is output from the audio output terminal 482 connected with the audio D/A converter 458B.

The video decoder 457A is connected to the second video encoder 452B so as to encode the decoded content information such as video data and image data by the second video encoder 452B again. Likewise, the audio decoder 457B is connected to the second audio encoder 453B so as to encode the decoded content information such as audio data and music data by the second audio encoder 453B again.

### [Operation of Recording/playback system]

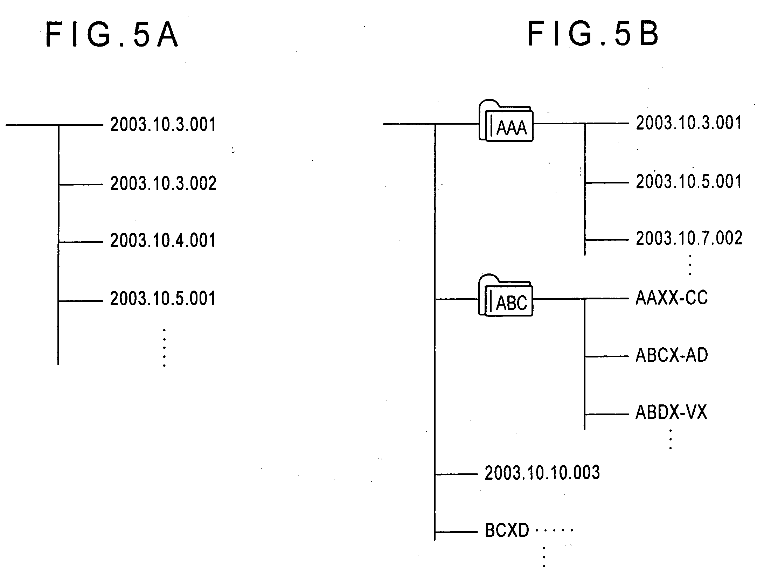

Next, the operation in the above-described recording/playback system 100 will be described with reference to attached drawings. Although change of title name, deletion and grouping are described as examples of the editing of the content information with modification of the management information in this embodiment, any editing method is applicable as previously mentioned. Fig. 5A and Fig. 5B are conceptual diagrams each explaining the editing of content information: Fig. 5A is a conceptual diagram schematically showing management information; -and Fig. 5B is a conceptual diagram schematically showing modification management information.

### (Recording of Content Information)

First, the recording operation for recording the content information will be described. In this embodiment, an operation for recording TV broadcast will be described as an example of recording information. However, the recording operation is not limited to the above. For example, the recording operation is applicable to the recording of various types of information such as radio broadcast, satellite broadcast, and further video data, image data and audio data or music data recorded in an external apparatus.

For recording the content information, a user appropriately supplies power to the information processing apparatus 400 to start it up. The user then inputs an instruction to record, for example, a TV broadcast using the input section 410. Based on the input operation, the control section 460 of the information processing apparatus 400 has the information processing section 450 to appropriately process the content information input from the input terminal 470. The editing section 463 then records the content information based on the information relevant to the recording destination, which is a setting item set by the input operation.

That is, the content information such as video data and image data input from the video input terminal 471 is converted into digital signals by the video A/D converter 451A while the content information such as audio data and music data input from the audio input terminal 472 is converted into digital signals by the audio A/D converter 451B. The system control section 455B then encodes the content information converted into digital signals based on a signal of a recording destination input together with a signal of recording instruction via the input section 410. That is, if the recording destination is at least either one of the HD 431 and the recording medium, the first video encoder 452A encodes the content information such as video data and image data converted into digital signals based on, for example, MPEG-1/2 while the first audio encoder 453A encodes the content information such as audio data and music data converted into digital signals based on, for example, AC-3. Also, if the recording destination is the external medium, the second video encoder 452B encodes-the content information such as video data and image data converted into digital signals based on, for example, MPEG-4 while the second audio encoder 453B encodes the content information such as audio data and music data converted into digital signals.

The content information such as video data and image data encoded by the first video encoder 452A and the content information such as audio data and music data encoded by the first audio encoder 453A are multiplexed into a set of signals of the content information as a single channel by the first multiplexer 454A. Also, the content information such as video data and image data encoded by the second video encoder 452B and the content information such as audio data and music data encoded by the second audio encoder 453B are multiplexed into a set of signals of the content information as a single channel by the second multiplexer 454B. After that, based on the signal of the recording destination input together with the signal of recording instruction via the input section 410, the system control section 455B controls the stream switcher 455A to output the content information multiplexed by the first multiplexer 454A and the script information for reproducing the content information to the drive mechanism section 420 or the HD section 430, or to output the content information multiplexed by the second multiplexer 454B and the script information of the content information to the external medium section 440. The output content information and the script information are recorded appropriately in the recording medium loaded in the drive mechanism section 420, the HD 431 of the HD section 430 or the external medium mounted on the external medium section 440.

### (Editing of Content Information)

Next, the editing operation for editing the content information will be described with reference to attached drawings. For editing the content information, the user inputs an instruction to edit predetermined content information using the input section 410. Based on the input operation, the control section 460 of the information processing apparatus 400 controls the external medium section 440 to determine whether or not information to be edited, i.e., management information recorded in the recording medium loaded in the drive mechanism section 420 or the HD 431 of the HD section 430 is recorded in the mounted external medium. When it is determined that the management information to be edited is recorded in the external medium, for example, the control section 460 has the not-shown display apparatus of the information processing apparatus 400 to display the fact to notify it to the user. Based on the notification, the user removes the external medium from the information processing apparatus 400 and mounts it on the information editing apparatus 300.

On the other hand, when the control section 460 determines that the management information to be edited is not recorded in the external medium, the user appropriately inputs an instruction to record the management information recorded in the HD 431 or the recording medium into the external medium, i.e., instruction to select information to be edited using the input section 410. Based on the input operation, the system control section 455B controls the drive mechanism section 420 or the HD section 430 via the management information sending section 461 to receive the management information from the recording medium or the HD 431 and records the information in the external medium. The recording processing status of the management information is appropriately displayed on a not-shown display apparatus of the information processing apparatus 400 to notify it to the user. Based on the notification, the user removes the external medium from the information processing apparatus 400 and mounts it on the information editing apparatus 300.

In the information editing apparatus 300, based on the instruction to edit the content information input by the user using the terminal input section 310, the terminal information receiving section 351 of the terminal control section 350 controls the terminal external medium section 340 to receive the management information to be edited from the mounted external medium. Based on a predetermined input operation using the terminal input section 310, the terminal control section 350 appropriately controls the terminal display apparatus 320 to display the received management information on the screen. For example, information in text format such as title name constituting the management information as shown in Fig. 5A and thumbnail images are displayed on the screen for editing. Then, based on the input operation using- the terminal input section 310, the terminal control section 350 controls at least one of the terminal display apparatus 320 and the terminal speaker apparatus 330 when a predetermined title name is selected, thereby appropriately displaying or outputting as sounds, i.e., reproducing video data and audio data, which is a part of the content of the content information constituting the management information. The data to be reproduced is, for example, data that lasts for several seconds or a still image for identification of content thereof.

The user identifies the content of the management information with such input operation, and then appropriately modifies the management information, that is, changes the text name, deletes unnecessary content information, or creates directories for grouping that facilitates the management by the user, based on predetermined input operation using the terminal input section 310. Based on the input operation for modification, the modification management information generating section 352 of the terminal control section 350 generates the modification management information having list structure as shown in Fig. 5B. The terminal information sending section 353 of the terminal control section 350 appropriately controls the terminal external medium section 340 to record the modification management information generated by the modification management information generating section 352 into the external medium. The recording status is displayed, for example, on the terminal display apparatus 320 to notify it to the user.

When the user recognizes the notification displayed on the terminal display apparatus 320 indicating that the modification management information is recorded, the user removes the external medium and mount it on the information processing apparatus 400. The user then sets an editing content using the input section 410, i.e., inputs an instruction for setting that the recording medium or the HD 431 is managed based on the modification management information. Based on this input operation, the control section 460 of the information processing apparatus 400 has the modification management information receiving section 462 to control the external medium section 440 to receive the modification management information recorded in the external medium. The editing section 463 recognizes the recording medium or the HD 431 to be edited based on the - modification management--information,- and the control section 460 controls the drive mechanism section 420 or the HD section 430 to record the modification management information in the recording medium or the HD 431. Further, based on the modification management information, the editing section 463 edits, e.g., divides, deletes or combines the content information recorded in the recording medium or the HD 431. When recording the modification management information, it may be recorded in any state as long as the content of the modification management information is managed. For example, it may be recoded as an update by deleting the existing management information, or it may be recorded in a manner that only the modification management information is validated by adding flag information or the like for ignoring the management information. If the flag information is used, the management information may be reused for managing based on the management information again after deleting the flag information.

### (Reproduction of Content Information)

Next, the reproducing operation for reproducing the recorded content information based on the modification management information will be described. In the reproduction of the content information, when the power is supplied to the information processing apparatus 400, the control section 460 appropriately controls the drive mechanism section 420, the HD section 430 or the external medium section 440 to receive the management information or the modification management information (if any) recorded in the recording medium, the HD 431 and the external medium. The control section 460 has the terminal display apparatus 320 or the not-shown display apparatus of the information processing apparatus 400 to display the management informant or the modification management information. To be more specific, a playlist displaying all the title names or thumbnail images as the content of the recorded content information is displayed on the screen. When the user selects a predetermined title name or a thumbnail image and inputs an instruction for reproducing it using the input section 410 with reference to the screen, the control section 460 appropriately controls the drive mechanism section 420, the HD section 430, or the external medium section 440 to read out the selected content information. The information processing section 450 then processes the content information for the reproduction and reproduces it.

To be more specific, based on information regarding the information to be reproduced, which is selected through the input operation, recorded in the memory, the system control section 455B has the stream switcher 455A searches the drive mechanism section 420, the HD section 430 or the external medium section 440 for the content information to be reproduced and receives it. The demultiplexer 456 then divides the received content information into content information such as video data and image data and content information such as audio data and music data. The divided content information such as video data and image data is decoded based on, for example, MPEG system by the video decoder 457A while the content information such as audio data and music data is decoded by the audio decoder 457B. After that, the decoded content information such as video data and image data is converted from digital signals into the analog signals by the video D/A converter 458A while the decoded content information such as audio data and music data is converted from digital signals into the analog signals by the audio D/A converter 458B. The content information such as video data and image data converted into analog signals is output from the video output terminal 481 while the content information such as audio data and music data converted into analog signals is output from the audio output terminal 482. With the output of the content information, the display apparatus 210 connected to the video output terminal 481 displays the content information such as video data and image data on the screen while the speaker apparatus 220 connected to the audio output terminal 482 outputs the content information such as audio data and music data as sounds. The recorded content information is thus reproduced.

### [Advantages of Recording/playback system]

As previously mentioned, in the above embodiment, the management information is received using the management information sending section 461 from the drive mechanism section 420 or the HD section 430, which are capable of readably recording a plurality of pairs of the management information associated with the content information to be reproduced by the display apparatus 210 and the speaker apparatus 220 for managing the content information together with the content information, and then recorded in the external medium detachably mounted on the external medium section 440. The user mounts the external medium with the management information recorded therein on the information editing apparatus 300 so that the management information is received using the information editing apparatus 300. The generated modification management information having the content for managing the content information in the management information, which is modified, or, edited through the input operation using the terminal input section 310, is recorded in the external medium and, after mounting the external medium on the information processing apparatus 400 again, received by the modification management information receiving section 462. The editing section 463 records the modification management information using the drive mechanism section 420 or the HD section 430 so that the content information recorded in the recording medium mounted on the drive mechanism section 420 or the HD 431 of the HD section 430 is managed based on the modified content of the modification management information. With this arrangement, for example, using the information editing apparatus 300 carried by the user, the editing can be performed at spare time and the content is transferred to the information processing apparatus 400. Different from conventional manner, it is not necessary to carry out the editing while reproducing the content information on the information processing apparatus 400 using the display apparatus 210 and the speaker apparatus 220. Accordingly, the editing of the content information can be carried out effectively and easily. There is no need to transfer all the information in the recording medium or the HD 431 to be edited to the information editing apparatus 300. It is only required to transfer and edit the management information and then transfer the edited modification management information to the information processing apparatus 400 again. Therefore, transmission load of the information can be reduced, and a high-capacity external medium is unnecessary. Accordingly, the configuration can be easily simplified. If the information is transferred based on the communication using a network, communication cost can be easily reduced. The editing load in the information editing apparatus 300 can be also reduced, thereby facilitating the simplification of the configuration of the information editing apparatus 300, allowing effective use of mobile devices such as cellular phones, and expanding the applicability thereof.

An external medium is used to send the management information from the information processing apparatus 400 to the information editing apparatus 300 for editing it, and to send the edited modification management information from the information editing apparatus 300 to the information processing apparatus 400. Owing to this, the management information and the modification management information can be transferred with simple configuration. Therefore, cellular phones and the like using existing external media can be effectively employed. Thus effective editing can be easily obtained without spending communication cost.

The modification management information is recorded in the desired recording medium, the HD 431 and the like, and the editing such as deletion of the content information based on the modification management information is automatically performed by the editing section 463. This eliminates the need to edit based on the modification management information again in the information processing apparatus 400, thereby improving the convenience.

When the recording medium mounted on the drive mechanism section 420 is edited, the modification management information is recorded in the recording medium. Therefore, even when the content information in the recording medium is reproduced by another information processing apparatus 400, it is possible to manage based on the edited content, which may be edited title names, of the modification management information. Further, it is not necessary to have a memory or the HD 431 for separately storing the modification management information, and hence the configuration can be easily simplified.

The information editing apparatus 300 is a portable apparatus. Accordingly, user can edit information at any time, and thus convenient and easy editing can be achieved. Further, in addition to the terminal display apparatus 320 for displaying the management information and the modification management information to be modified and the terminal speaker apparatus 330 for outputting sounds, the information editing apparatus 300 is provided with the terminal input section 310 for setting and generating the modification management information. Accordingly, the user can easily edit the management information while checking the content of the content informant. Particularly, cellular phones having a display apparatus and an input apparatus can be used, and thereby easily expanding the applicability thereof.

A system configuration having the information processing apparatus 400 and the information editing apparatus 300 is employed. Accordingly, as described above, the information is edited by the information editing apparatus 300, and the edited information is appropriately transferred to the information processing apparatus 400. This configuration can easily realize the effective editing that allows each user to edit the information at any time the user desires. Therefore, the configuration for editing can be easily built and the use thereof can be easily expanded.

Since the recording/playback system is provided with the display apparatus 210 and the speaker apparatus 220, not only the editing of the content information but also the reproduction based on the edited content can be performed. For example, the information processing apparatus 400 may be integrally constructed with the display apparatus 210 and the speaker apparatus 220. Accordingly, by arranging the information processing apparatus 400 to be portable, the content information can be reproduced after editing the information at users' convenience.

### [Modification of Embodiment]

The present invention is not limited to the above-described embodiment, but includes the following modifications within a range that the object of the present invention can be achieved.

As the information to be edited and processed, for example, content information including video data and audio data is described. However, without limiting thereto, information including video data or image data only, or, audio data or music data only is applicable. Further, any information including another program information, text data or control signals is applicable. As for the recording medium, any medium capable of recording information is applicable, which may be optical disc such as DVD-ROM (Digital Versatile Disc-Read Only Memory), CD-DA (Compact Disk-Digital Audio), CD-ROM (Compact Disk-Read Only Memory), DVD-Audio, DVD-RAM (Digital Versatile Disc-Random Access Memory), DVD-R (Digital Versatile Disc-Recordable), DVD-RW (Digital Versatile Disc-ReWritable), magneto-optical (MO) disc, magnetic disk such as hard disk or flexible disk, magnetic tape, memory card, and IC (Integrated Circuit) card etc.

The above-described information processing apparatus 400 has the information processing section 450 for processing the content information so as to be reproduced. However, another device may be used for reproduction operation, and the content information may be processed so as to be only edited by the information editing apparatus 300. That is, for example, the information to be edited is received and transmitted to the information editing apparatus; the edited script information after the editing is received; and based on the edited script information, the information is appropriately output. Further, the configuration capable of recording has been described. However, another configuration may be provided to carry out the recording separately.

In the above description, the external medium is used for transmitting the management information from the information processing apparatus 400 to the information editing apparatus 300 as well as for transmitting the edited modification management information from the information editing apparatus 300 to the information processing apparatus 400. However, for example, the information may be transmitted and received via a radio medium using a communication tool as previously mentioned. With this configuration, a configuration for using the external medium and mounting/dismounting operation of the external medium are not required. Accordingly, simplification of the configuration can be achieved and the editing can be carried out easily and effectively.

The configuration of the information processing apparatus 400 equipped with both of the drive mechanism section 420 and the HD section 430 is described. However, it may be employed such configuration that only either one them is provided; such configuration that a plurality of the drive mechanism sections 420 and the HD sections 430 are provided; or such configuration that a plurality of the external medium sections 440 are provided for transferring the management information of the external medium to an external medium which can be mounted on the information editing apparatus 300 to be edited therein.

And as for the editing operation, a function for editing in the information processing apparatus 400 may be added.

Although the information editing apparatus 300 is the portable type in the above embodiment, it is not limited to the portable type. For example, it may be arranged so that a plurality of the information editing apparatuses 300 are connected to the information processing apparatus 400 in a network configuration so as to transmit and receive the information therebetween, and the information is appropriately edited in each of the information editing apparatuses 300; and the edited content is controlled integrally by the information processing apparatus 400 to output the information therefrom. With such configuration, compared to the case where the information is edited in the information processing apparatus 400, the information can be edited effectively and easily. As for the network through which the information is transferred between the information processing apparatus 400 and the information editing apparatus 300, for example, the following medium is available; i.e., the Internet based on a general protocol such as TCP/IP, an intranet, LAN (Local Area Network), a network such as communication line network or broadcast network in which a plurality of base stations capable of transmitting and receiving the information via a radio medium constitute a network, and further, a radio medium itself that serves as the medium for directly transmitting and receiving the information. However, the network is not limited to the above, but any configuration capable of transmitting and receiving the information may be employed. Further, as for the radio medium, any medium such as electric waves, light, acoustic waves, electromagnetic waves are applicable.

### [Advantages of Embodiment]

As previously mentioned, the management information is received using the management information sending section 461 from the drive mechanism section 420 or the HD section 430, which are capable of readably recording a plurality of pairs of the management information associated with the content information to be reproduced by the display apparatus 210 and the speaker apparatus 220 for managing the content information together with the content information, and then received by the information editing apparatus 300 using, for example, the external medium. The generated modification management information having the content for managing the content information in the management information, which is modified through the input operation using the terminal input section 310, is received by the modification management information receiving section 462 of the information processing apparatus 400 using the external medium. The editing section 463 records the modification management information using the drive mechanism section 420 or the HD section 430 so that the content information recorded in the recording medium mounted on the drive mechanism section 420 or the HD 431 of the HD section 430 is managed based on the modified content of the modification management information. With this arrangement, for example, using the information editing apparatus 300 carried by the user, the editing can be performed at spare time and the content is transferred to the information processing apparatus 400. Different from conventional manner, it is not necessary to carry out the editing while reproducing the content information on the information processing apparatus 400 using the display apparatus 210 and the speaker apparatus 220. Accordingly, the editing of the content information can be carried out effectively and easily.

The management information for managing the content information to be reproduced by the display apparatus 210 and the speaker apparatus 220 is received from the information processing apparatus 400 by the terminal information receiving section 351 using, for example, the external medium and then displayed on the terminal display apparatus 320. The modification management information having the modified content for managing the content information in the management information is generated by the modification management information generating section 352 through the input operation using the terminal input section 310 and then sent to the information processing apparatus 400 by the terminal information sending section 353 using, for example, the external medium. With this arrangement, for example, using the information editing apparatus 300 carried by the user, the editing can be performed- at spare time and the content is transferred to the information processing apparatus 400. Different from conventional manner, it is not necessary to carry out the editing while reproducing the content information on the information processing apparatus 400 using the display apparatus 210 and the speaker apparatus 220. Accordingly, the editing of the content information can be carried out effectively and easily.

## Claims

1. An information processing apparatus, comprising:
a recording section capable of recording information output from an output section and management information associated with the information for managing the information in a readable manner;
a management information sending section for sending the management information;
a modification management information receiving section for receiving modification management information in which a content in the management information for managing the information is modified with input operation in a terminal apparatus by which the sent management information is received; and
an editing section for making the recording section store the modification management information so that the information is managed according to the modified content of the received modification management information.

2. An information processing apparatus according to claim 1, wherein
an external recording medium mounted detachably on the terminal apparatus is arranged to be detachable,
the management information sending section and the modification management information receiving section are capable of transmitting the management information to the terminal apparatus or receiving the modification management information from the terminal apparatus via the external recording medium.

3. An information processing apparatus according to claim 1 or claim 2, further comprising an information processing section for processing the information so that the output section can output the information based on the received modification management information.

4. An information editing apparatus for editing and processing various information, which is recorded in a recording section capable of recording plural pieces of the information and is output by an output section, comprising:
a terminal information receiving section for receiving management information respectively associated with the information and recorded in the recording section for managing the information from a processing apparatus that processes the information so that the information can be output by the output section;
a terminal display section for displaying the received management information;
a modification management information generating section for generating modification management information in which a content in the management information for managing the information is modified with input operation; and
a terminal information sending section for sending the modification management information to the processing apparatus so that the information is managed according to the modified content-of-the-generated modification management information.

5. An information processing system, comprising:
the information processing apparatus according to any one of claims 1 to 3; and
a terminal apparatus that receives the management information sent from the information processing apparatus, generates modification management information in which a content in the management information for managing the information is modified with input operation, and sends to the information processing apparatus.

6. An information processing system, comprising:
the information processing apparatus according to any one of claims 1 to 3; and
the information editing apparatus according to claim 4 for receiving the management information from and sending the modification management information to the information processing apparatus as a processing apparatus.

7. A playback apparatus, comprising:
the information processing apparatus according to any one of claims 1 to 3; and
an output section for outputting the information recorded in the information processing apparatus.

8. A playback system, comprising:
the information processing system according to claim 5 or claim 6; and
an output section for outputting the information recorded in an information processing apparatus of the information processing system.

9. An information processing method for editing and processing various information, which is recorded in a recording section capable of recording plural pieces of the information and is output by an output section, the information processing method comprising:
making a terminal apparatus receive management information recorded in the recording section and respectively associated with the information for managing the information;
receiving modification management information, in which a content in the management information for managing the information is modified, generated with input operation in the terminal apparatus-from the-terminal-apparatus; and
recording the modification management information in the recording section so that the information is managed according to the modified content of the received modification management information.

10. An information editing method for editing and processing of various information, which is recorded in a recording section capable of recording plural pieces of the information and is output by an output section, the information editing method comprising:
receiving management information recorded in the recording section and respectively associated with the information for managing the information;
modifying a content in the management information for managing the information with input operation to generate modification management information; and
recording the modification management information in the recording section so that the information is managed according to the modified content of the generated modification management information.

11. An information processing program for having a computing section to execute the information processing method according to claim 9.

12. An information processing program for having a computing section to execute the information editing method according to claim 10.

13. A recording medium storing the information processing program according to claim 11 or claim 12 in a manner readable by a computing section.
